# EUROPEAN PATENT SPECIFICATION

(11) **EP 3 007 091 B1**
(45) Date of publication and mention of the grant of the patent: **13.06.2018**
(21) Application number: 15187236.3
(22) Date of filing: 28.09.2015
(51) Int. Cl.: G06F 21/41, G06F 21/45, H04L 29/06

(54) **AUTHENTICATION INFORMATION MANAGING METHOD, STORAGE MEDIUM, AND INFORMATION PROCESSING DEVICE**
AUTHENTIFIZIERUNGSINFORMATIONSVERWALTUNGSVERFAHREN, SPEICHERMEDIUM UND INFORMATIONSVERARBEITUNGSVORRICHTUNG
PROCÉDÉ DE GESTION D'INFORMATIONS D'AUTHENTIFICATION, SUPPORT DE STOCKAGE ET DISPOSITIF DE TRAITEMENT D'INFORMATIONS

(30) Priority: 10.10.2014 JP 2014209487
(43) Date of publication of application: 13.04.2016
(73) Proprietor: FUJITSU LIMITED, Kawasaki-shi, Kanagawa 211-8588 (JP)
(72) Inventor: YASAKI, Koichi, Kawasaki-shi, Kanagawa 211-8588 (JP); NIMURA, Kazuaki, Kawasaki-shi, Kanagawa 211-8588 (JP)
(74) Representative: Hutchison, James

(56) References cited:
- US-A1- 2014 101 772
- SAMUR ARAUJO ET AL: "Carbon: Domain-Independent Automatic Web Form Filling", 5 July 2010 (2010-07-05), WEB ENGINEERING, SPRINGER BERLIN HEIDELBERG, BERLIN, HEIDELBERG, PAGE(S) 292 - 306, XP019145302, ISBN: 978-3-642-13910-9 * the whole document *

## Description

### FIELD

The present technology discussed herein is related to an authentication information managing method, an authentication information managing program, and an information processing device.

### BACKGROUND

Services surrounding users have recently been increasing steadily, as is seen in a case of applications compatible with smart phones. In addition, many of the services perform authentication using a user identification (ID) and a password.

Single sign-on (SSO) is known as a technology that integrates authentication. In SSO, there are OpenID, security assertion markup language (SAML), and the like implemented on a server side, and there are a password manager and the like on a client side.

The password manager stores an application ID, a user ID, a password, and the IDs of input fields to which to perform input in association with each other, and when extracting the input fields of a corresponding application, automatically inputs the associated user ID and the associated password. In a case of a web browser, for example, the application ID is a unique ID such as "http://www.AAA.AAA" or the like.
A related technology is disclosed in Japanese Laid-open Patent Publication No. 2014-48738, Japanese Laid-open Patent Publication No. 2013-257624, Japanese Laid-open Patent Publication No. 2014-157578, or Japanese Laid-open Patent Publication No. 2012-83878. US 2014/0101772 A1 discloses an input apparatus including an information storage unit which stores identification information of an application or a service and user information such that the identification information and the user information are correlated with each other, an input manipulation detecting unit which detects an input manipulation on an editable region in an image area of the application, a region detecting unit which detects editable regions included in the image area of the application, and a control unit which, if at least one of the detected editable regions includes a first region having a prescribed input attribute for input of first information in the user information, performs a control so that at least part of the user information is input using, as a reference, the first region or the editable region whether the input manipulation is detected.

### SUMMARY

### Technical Problem

However, the above techniques cause inputting errors for highly independent applications such as applications in a smart phone.

For example, applications executed in a smart phone or applications executed in a virtual machine are highly independent, and these applications limit accesses from other applications to them. For this reason, password manager cannot detect IDs of input fields and may perform incorrect inputting such as inputting a password to an input field for user ID.

It is desirable to input authentication information automatically.

The invention is defined by the claims, to which reference should now be made.

According to embodiments of aspects of the present invention, there are provided authentication information managing methods, non-transitory computer-readable storage media storing programs, and information processing devices, all as defined in the claims. The claims define the scope of the invention.

According to embodiments of the authentication information managing method disclosed herein, an effect in which it is possible to input authentication information automatically.

### BRIEF DESCRIPTION OF DRAWINGS

Embodiments of the invention are set out, by way of example only, with reference to the following drawings, in which:
FIG. 1 is a diagram of assistance in explaining a smart phone according to a first embodiment;
FIG. 2 is a diagram illustrating an example of hardware configuration of a smart phone according to the first embodiment;
FIG. 3 is a functional block diagram illustrating a functional configuration of a smart phone according to the first embodiment;
FIG. 4 is a diagram illustrating an example of information stored in a scene database;
FIG. 5 is a diagram illustrating an example of information stored in an authentication information database;
FIG. 6 is a diagram of assistance in explaining an inter-field distance;
FIG. 7 is a flowchart illustrating a flow of preprocessing performed by a smart phone;
FIG. 8 is a flowchart illustrating a flow of automatic input processing performed by a smart phone;
FIG. 9 is a diagram of assistance in explaining automatic input processing performed by a smart phone;
FIG. 10 is a diagram of assistance in explaining automatic input processing performed by a smart phone according to a second embodiment; and
FIG. 11 is a flowchart illustrating a flow of automatic input processing performed by a smart phone according to the second embodiment.

### DESCRIPTION OF EMBODIMENTS

Embodiments of an authentication information managing method, an authentication information managing program, and an information processing device disclosed in the present application will hereinafter be described in detail with reference to the drawings. It is to be noted that the embodiments do not limit the present technology.

### [First Embodiment]

### [Description of Smart Phone]

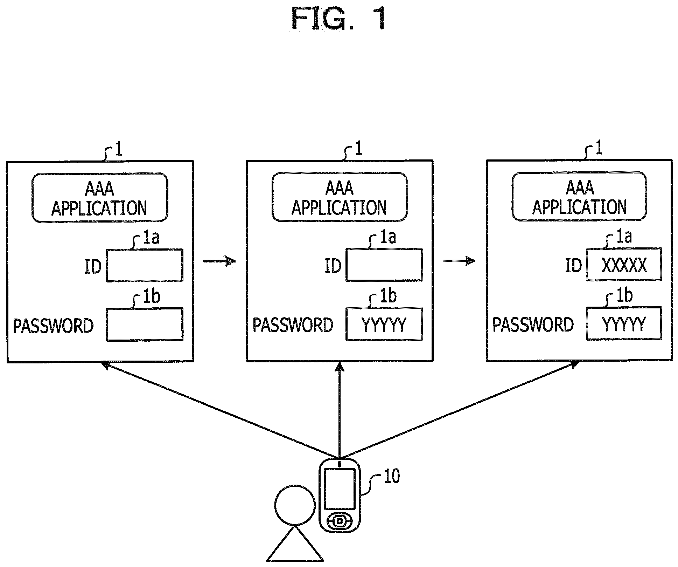

FIG. 1 is a diagram of assistance in explaining a smart phone according to a first embodiment. A smart phone 10 to be described in the present embodiment is an example of a user terminal such as a mobile terminal, an information processing device, or the like. In addition to the smart phone 10, a mobile telephone, a server, a notebook personal computer, and the like can also perform similar processing.

As illustrated in FIG. 1, the smart phone 10 uses an already installed application, a web browser, or the like. The smart phone 10 can thus use various applications. In addition, when each application is accessed by the user terminal, the application makes a user ID and a password input to perform user authentication, and permits a user who permits the user authentication to use the application.

For example, as illustrated in FIG. 1, an AAA application 1 displays, on the smart phone 10, a top screen including an input field 1a for inputting a user ID (which input field may hereinafter be described as an ID field) and an input field 1b for inputting a password (which input field may hereinafter be described as a password field). The AAA application 1 then performs user authentication using the user ID input to the ID field 1a and the password input to the password field 1b.

The smart phone 10 manages user IDs and passwords of various kinds of applications by using software such as a password manager or the like.

Such a smart phone 10 refers to a storage unit that stores an identifier identifying the application 1 and authentication information in association with each other. Then, when the identifier obtained from the application 1 is stored in the storage unit, the smart phone 10 detects an input field having the attribute of the authentication information from the application 1. Thereafter, the smart phone 10 refers to the storage unit, and inputs the authentication information stored in association with the identifier to the detected input field.

For example, after the smart phone 10 detects a field having a password attribute from an application screen, and inputs the password stored in advance, the smart phone 10 inputs the ID stored in advance to an ID field at an inter-field distance stored in advance. The smart phone 10 can thus realize automatic input of the authentication information even when it is difficult to detect IDs identifying the input fields.

### [Hardware Configuration]

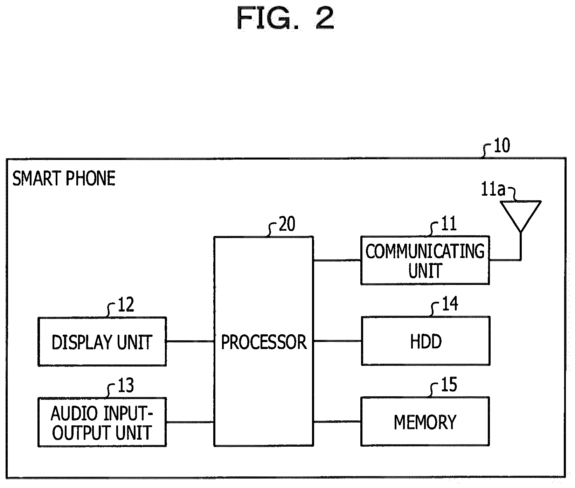

FIG. 2 is a diagram illustrating an example of hardware configuration of a smart phone according to the first embodiment. The smart phone illustrated in FIG. 2 may be the smart phone 10 illustrated in FIG. 1. As illustrated in FIG. 2, the smart phone 10 includes a communicating unit 11, a display unit 12, an audio input-output unit 13, a hard disk drive (HDD) 14, a memory 15, and a processor 20. Incidentally, the hardware cited here is an example. The smart phone 10 may include other hardware.

The communicating unit 11 is a circuit or the like that performs radio communication with another device via an antenna 11a. The display unit 12 is a display, a touch panel, or the like that displays various kinds of information. The audio input-output unit 13 is a circuit or the like that outputs sound from a speaker and which subjects sound collected by a microphone to various kinds of processing.

The HDD 14 is a storage device that stores databases, tables, and the like. The memory 15 is a storage device used to expand a program or the like. The processor 20 is an electronic circuit or the like that controls the whole of the smart phone 10. The processor 20 reads a program stored on the HDD 14, expands the program into the memory 15, and executes various kinds of software such as a password manager and the like.

### [Functional Configuration of Smart Phone]

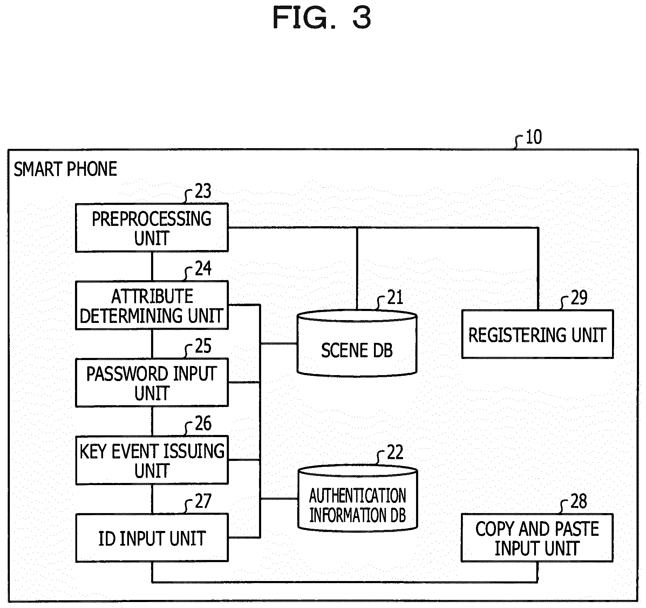

FIG. 3 is a functional block diagram illustrating a functional configuration of a smart phone according to the first embodiment. The smart phone illustrated in FIG. 3 may be the smart phone 10 illustrated in FIG. 1. As illustrated in FIG. 3, the smart phone 10 includes a scene DB 21, an authentication information DB 22, a preprocessing unit 23, an attribute determining unit 24, a password input unit 25, a key event issuing unit 26, an ID input unit 27, a copy and paste input unit 28, and a registering unit 29.

The scene DB 21 and the authentication information DB 22 are databases stored on the HDD 14 or the like. The preprocessing unit 23, the attribute determining unit 24, the password input unit 25, the key event issuing unit 26, the ID input unit 27, the copy and paste input unit 28, and the registering unit 29 are an example of an electronic circuit of the processor 20 or an example of processes executed by the processor 20.

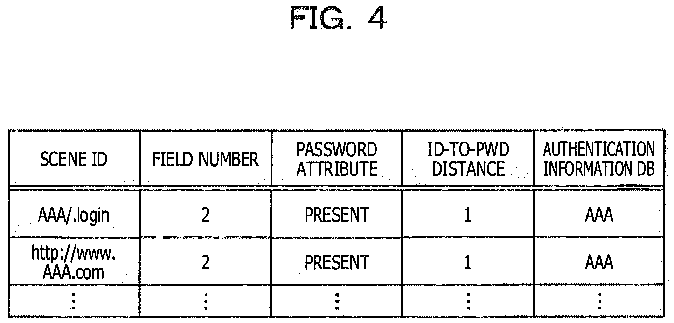

The scene DB 21 is a database that stores each piece of application field information, information for identifying authentication information to be input to each application, and the like. FIG. 4 is a diagram illustrating an example of information stored in a scene database (DB).

As illustrated in FIG. 4, the scene DB 21 stores a "scene ID," a "field number," a "password attribute," an "ID-to-PWD distance," and an "authentication information DB" in association with each other. The "scene ID" is an identifier identifying an application that requests authentication, and for example can be obtained from an authentication screen displayed by the application. The "field number" is the number of input fields possessed by the authentication screen displayed by the application. The "password attribute" is information indicating whether or not the authentication screen displayed by the application has an input field having a password attribute.

The "ID-to-PWD distance" is information indicating a distance between the password field having the password attribute and an ID field for inputting a user ID. The "authentication information DB" is information identifying a record in the authentication information DB 22, and is for example key information (or a piece of key information). Incidentally, the "scene ID," the "field number," the "password attribute," and the "ID-to-PWD distance" can be updated by an administrator or the like as appropriate, and can also be updated automatically by a distribution from a management server or the like.

In the example of FIG. 4, the authentication screen of an application identified by "AAA/.login" includes two input fields including an input field having the password attribute, and includes an ID field at a position at a distance "1" from the password field. Then, the information on the application and a record stored in the authentication information DB 22 are associated with each other by "AAA."

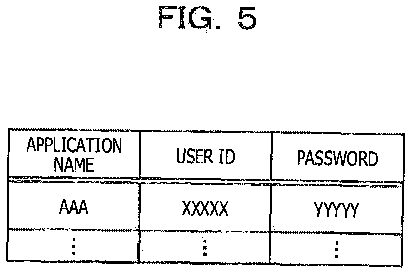

The authentication information DB 22 is a database that stores, for each application, a user ID and a password in association with each other. FIG. 5 is a diagram illustrating an example of information stored in an authentication information database (DB). As illustrated in FIG. 5, the authentication information DB 22 stores an "application name," a "user ID," and a "password" in association with each other.

The "application name" is an identifier identifying an application, and corresponds to an authentication information DB in FIG. 4. The "user ID" represents an identifier identifying a user. The "password" represents a password associated with the user ID. FIG. 5 indicates that it is possible to log in to the application identified by "AAA" with an ID "XXXXX" and a password "YYYYY."

The preprocessing unit 23 is a processing unit that performs preprocessing before automatic input of authentication information is performed. For example, the preprocessing unit 23 determines whether or not an application being started, that is, an application displaying an authentication screen is an object for automatic input, activates the authentication screen, and places focus on an input field possessed by the authentication screen.

For example, when the application is executed or web access is made, and the top screen of the application is displayed, the preprocessing unit 23 obtains a scene ID from the top screen. To cite an example, the preprocessing unit 23 obtains a uniform resource locator (URL) or the like when the top screen is displayed by a web browser, and obtains an application name, an ID specified by the application, or the like in the case of the application.

When the obtained scene ID is stored in the scene DB 21, the preprocessing unit 23 determines that automatic input is possible, and inquires of a user whether or not to perform automatic input by displaying a screen inquiring whether or not to perform automatic input or the like. When the preprocessing unit 23 thereafter determines that automatic input is to be performed, the preprocessing unit 23 requests the attribute determining unit 24 to start processing. In addition, the preprocessing unit 23 can make a button appear within an input method editor (IME) to notify the user that automatic input is possible. In addition, the preprocessing unit 23 can change the IME automatically according to the displayed top screen, or can allow the user to select an IME to be used.

When the obtained scene ID is not stored in the scene DB 21, on the other hand, the preprocessing unit 23 determines that automatic input is difficult, and inquires of the user whether or not to make a new registration by displaying a screen inquiring whether or not to make a new registration or making a button indicating a new registration appear within the IME, for example. When the preprocessing unit 23 thereafter determines that a new registration is to be performed, the preprocessing unit 23 requests the registering unit 29 to start processing.

In addition, when an application is executed which performs user authentication processing that determines whether the user can use this password manager function (for example biometric authentication such as fingerprint authentication, face authentication, or the like), for example, after the preprocessing unit 23 requests the attribute determining unit 24 to start automatic input processing, the preprocessing unit 23 refocuses on the input field in the previous authentication screen. For example, when an active screen is changed before a start of automatic input, the preprocessing unit 23 reactivates the authentication screen for inputting authentication information, and then makes automatic input performed.

The attribute determining unit 24 is a processing unit that detects an input field having the password attribute from the screen displayed by the application when the scene ID obtained from the application being started is stored in the scene DB 21.

For example, when the attribute determining unit 24 is given an instruction to start automatic input from the preprocessing unit 23, the attribute determining unit 24 detects an input field having the password attribute from input fields possessed by the top screen of the application in an active state. To cite an example, the attribute determining unit 24 obtains an input field having the password attribute from a field attribute obtained from an operating system (OS) for the IME to determine an optimum keyboard type (numbers, alphabets, or characters) for the field, a logical configuration of the authentication screen prepared by the OS for audio output of the displayed screen, hypertext markup language (HTML), or the like. Namely, the password attribute is obtained from outside the application. When the attribute determining unit 24 detects an input field having the password attribute, that is, a password field, the attribute determining unit 24 requests the password input unit 25 to input a password.

The password input unit 25 is a processing unit that inputs a password to the password field. For example, when the attribute determining unit 24 requests the password input unit 25 to input a password, the password input unit 25 obtains the scene ID from the preprocessing unit 23. Then, the password input unit 25 identifies the key information associated with the obtained scene ID from the scene DB 21, and identifies the password associated with the identified key information from the authentication information DB 22.

Next, the password input unit 25 inputs the identified password in the password field detected by the attribute determining unit 24. The password input unit 25 thereafter requests the key event issuing unit 26 to search for an ID field.

The key event issuing unit 26 is a processing unit that issues a key event to search for an ID field from the top screen of the application. For example, the key event issuing unit 26 searches for an ID field on the top screen of the application, that is, on the authentication screen, from the ID-to-PWD distance stored in the scene DB 21 and the position of the password field detected by the attribute determining unit 24.

For example, when the password input unit 25 requests the key event issuing unit 26 to search for an ID field, the key event issuing unit 26 obtains the scene ID from the preprocessing unit 23. The key event issuing unit 26 then identifies the ID-to-PWD distance associated with the obtained scene ID from the scene DB 21. Thereafter, the key event issuing unit 26 issues a key event corresponding to the ID-to-PWD distance, and detects an ID field. When the key event issuing unit 26 detects an ID field, the key event issuing unit 26 requests the ID input unit 27 to input a user ID.

To cite an example, the key event issuing unit 26 detects, as an ID field, an input field located the ID-to-PWD distance above or below the password field. The ID-to-PWD distance will be described in the following.

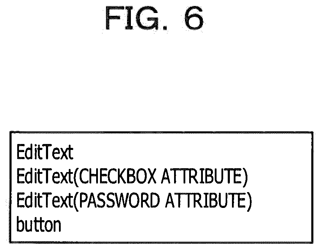

FIG. 6 is a diagram of assistance in explaining an inter-field distance. FIG. 6 illustrates an example of a logical configuration of the top screen, in which example there are three pieces of "EditText" representing input fields. In this case, the input field "EditText" for inputting an ID is located two rows above the input field "EditText (password attribute)" having the password attribute. Hence, the distance between the password field and the ID field is "2."

The ID input unit 27 is a processing unit that inputs a user ID to an ID field. For example, when the key event issuing unit 26 requests the ID input unit 27 to input a user ID, the ID input unit 27 obtains the scene ID from the preprocessing unit 23. Then, the ID input unit 27 identifies the key information associated with the obtained scene ID from the scene DB 21, and identifies the user ID associated with the identified key information from the authentication information DB 22.

Next, the ID input unit 27 inputs the identified user ID to the ID field detected by the key event issuing unit 26. The ID input unit 27 thereafter makes user authentication started by depressing a login button or the like present on the top screen to which the user ID and the password have been input.

Here, when the user authentication is rejected or when there is another input field, the ID input unit 27 requests the copy and paste input unit 28 to assist in the input of authentication information.

The copy and paste input unit 28 is a processing unit that performs input by copying and pasting. For example, when the ID input unit 27 requests the copy and paste input unit 28 to perform processing, the copy and paste input unit 28 displays a list of information associating user IDs and passwords used previously with one another on a display or the like. Then, the copy and paste input unit 28 copies a user ID and a password selected by the user, and pastes the user ID and the password to input fields selected by the user.

The registering unit 29 is a processing unit that registers anew a user ID and a password. For example, when the preprocessing unit 23 requests the registering unit 29 to perform new registration processing, the registering unit 29 may obtain a user ID and a password input by the user from the top screen being displayed, or prepare a display screen dedicated to registration, prompt for input of an ID and a password within the screen, and obtain the ID and the password. In addition, in the input of a password in a new registration, a button for automatically creating a password in accordance with a password policy of the application on behalf of the user may be provided, and password input may be performed by pressing the button. Next, the registering unit 29 obtains the scene ID from the preprocessing unit 23, and identifies the record including the obtained scene ID from the scene DB 21. The registering unit 29 then determines whether or not an "authentication information DB" is registered in the identified record.

Here, when an "authentication information DB" is registered in the identified record, the registering unit 29 retrieves a user ID and a password from the authentication information DB 22 using the "authentication information DB" as a key. Then, the registering unit 29 updates the retrieved user ID and the retrieved password with the new user ID and the new password obtained from the top screen.

When the "authentication information DB" is not registered in the identified record, on the other hand, the registering unit 29 creates the "authentication information DB," and stores the "authentication information DB" in the scene DB 21. Further, the registering unit 29 stores, in the authentication information DB 22, information associating the newly created "authentication information DB" with the user ID and the password obtained from the top screen.

### [Flow of Preprocessing]

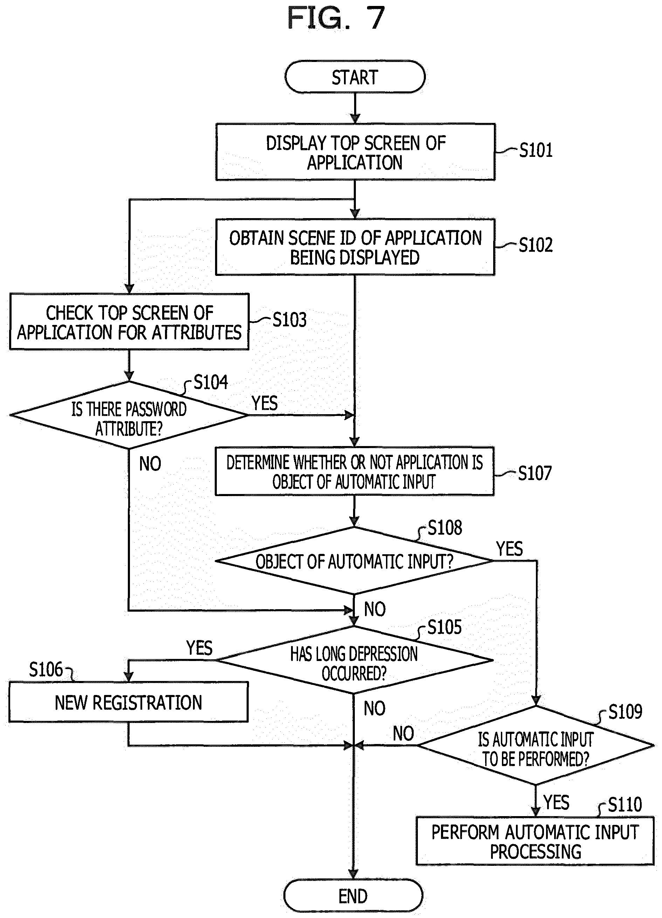

Description will next be made of preprocessing performed by the smart phone 10. FIG. 7 is a flowchart illustrating a flow of preprocessing performed by a smart phone.

As illustrated in FIG. 7, when the application is started, the preprocessing unit 23 displays the top screen of the application (S101).

Then, the preprocessing unit 23 obtains the scene ID from the top screen of the application (S102). In parallel with processing S102, the preprocessing unit 23 checks the top screen of the application for attributes possessed by the top screen (S103), and determines whether or not there is a password attribute (S104).

Then, when there is no password attribute (S104: No), and a given button or the like is pressed long (S105: Yes), the preprocessing unit 23 requests the registering unit 29 to perform new registration processing (S106). When there is no password attribute, and the given button or the like is not pressed long either (S105: No), on the other hand, the preprocessing unit 23 ends the processing. Alternatively, the preprocessing unit 23 can request the copy and paste input unit 28 to perform processing.

When the top screen of the application has the password attribute (S104: Yes), on the other hand, the preprocessing unit 23 determines whether or not the application is an object of automatic input, according to whether or not the scene ID obtained in S102 is registered in the scene DB 21 (S107).

Then, when the application is an object of automatic input (S108: Yes), the preprocessing unit 23 inquires whether or not to perform automatic input by displaying a confirmation screen or the like on the display (S109).

Here, when the preprocessing unit 23 determines that automatic input is to be performed (S109: Yes), the preprocessing unit 23 performs automatic input processing (S110). When the preprocessing unit 23 determines that automatic input is not to be performed (S109: No), on the other hand, the preprocessing unit 23 ends the processing. Alternatively, the preprocessing unit 23 can request the copy and paste input unit 28 to perform processing.

When the application is not an object of automatic input in S108 (S108: No), the preprocessing unit 23 performs processing from S105 on down.

### [Flow of Automatic Input Processing]

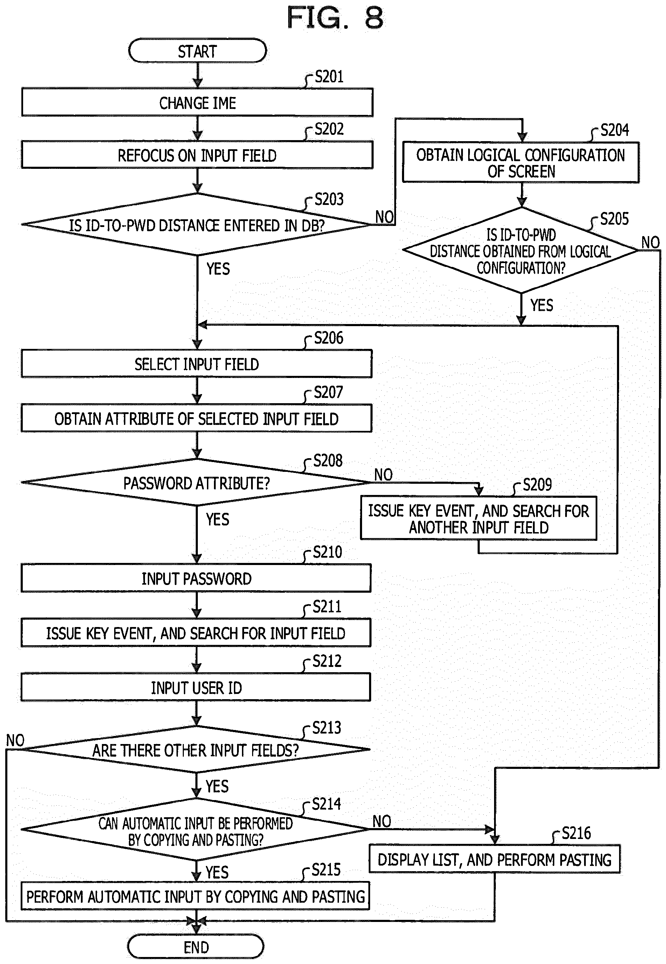

Description will next be made of automatic input processing performed by the smart phone 10. FIG. 8 is a flowchart illustrating a flow of automatic input processing performed by a smart phone.

As illustrated in FIG. 8, when the preprocessing unit 23 starts the automatic input processing, the preprocessing unit 23 changes to an IME according to the top screen of the application as a target or the like (S201). Next, when focus is not placed on an input field, that is, the target application, the preprocessing unit 23 refocuses on the target application (S202).

Then, the preprocessing unit 23 determines whether or not the ID-to-PWD distance corresponding to an obtained scene ID is recorded in the scene DB 21. When the ID-to-PWD distance corresponding to the obtained scene ID is not recorded (S203: No), the preprocessing unit 23 obtains the logical configuration of the screen (S204), analyzes the configuration, and calculates (obtains) the ID-to-PWD distance. When it is difficult to calculate the ID-to-PWD distance (S205: No), the preprocessing unit 23 displays a list of information associating user IDs and passwords used previously with one another on the display or the like, and pastes a user ID and a password (S216).

When the ID-to-PWD distance is recorded (S203: Yes), or when the ID-to-PWD distance can be obtained (S205: Yes), on the other hand, the attribute determining unit 24 selects an input field from the displayed top screen of the application (S206), obtains the attribute of the selected input field (S207), and determines whether or not the obtained attribute is the password attribute (S208).

Here, when the attribute determining unit 24 determines that the obtained attribute is not the password attribute (S208: No), the attribute determining unit 24 searches for another input field using a key event issued by the key event issuing unit 26 (S209), and then repeats the processing from S206 on down.

For example, when the attribute determining unit 24 requests the key event issuing unit 26 to issue a key event, the key event issuing unit 26 obtains the ID-to-PWD distance corresponding to the obtained scene ID from the scene DB 21. Then, the key event issuing unit 26 moves upward or downward from the detected input field by the obtained distance, detects a next input field, and notifies a result of the detection to the attribute determining unit 24. Incidentally, the movement may be made in either of an upward direction and a downward direction. When an input field is detected in both of the directions, an attribute from one of the input fields is determined.

When the attribute determining unit 24 determines that the obtained attribute is the password attribute (S208: Yes), on the other hand, the password input unit 25 inputs the password identified by using the scene DB 21 and the authentication information DB 22 to the detected password field (S210).

Thereafter, the key event issuing unit 26 issues a key event, and retrieves an input field (S211). Then, the ID input unit 27 determines that the retrieved input field is an ID field, and inputs the user ID identified by using the scene DB 21 and the authentication information DB 22 to the detected ID field (S212).

Thereafter, when there are no other input fields (S213: No), the ID input unit 27 ends the processing. When there are other input fields (S213: Yes), on the other hand, the copy and paste input unit 28 determines whether or not automatic input can be performed by copying and pasting (S214).

For example, when authentication processing is not permitted because of the presence of fields to which input is yet to be performed or the like, the copy and paste input unit 28 determines that there are other input fields. Then, the copy and paste input unit 28 determines whether the expiration date of the set of the user ID and the password with which authentication is permitted is exceeded. When the expiration date is not exceeded, the copy and paste input unit 28 determines that automatic input can be performed by copying and pasting. For example, the copy and paste input unit 28 determines whether automatic input can be performed by an auto-completion function.

Then, when the copy and paste input unit 28 determines that automatic input can be performed by copying and pasting (S214: Yes), the copy and paste input unit 28 inputs the user ID and the password to the respective input fields by copying and pasting (S215).

When the copy and paste input unit 28 determines that it is difficult to perform automatic input by copying and pasting (S214: No), on the other hand, the copy and paste input unit 28 displays a list of information associating user IDs and passwords used previously with one another on the display or the like, and pastes a user ID and a password (S216). Incidentally, the order of the processing can be changed within a scope in which no contradiction occurs.

### [Description of Automatic Input Processing]

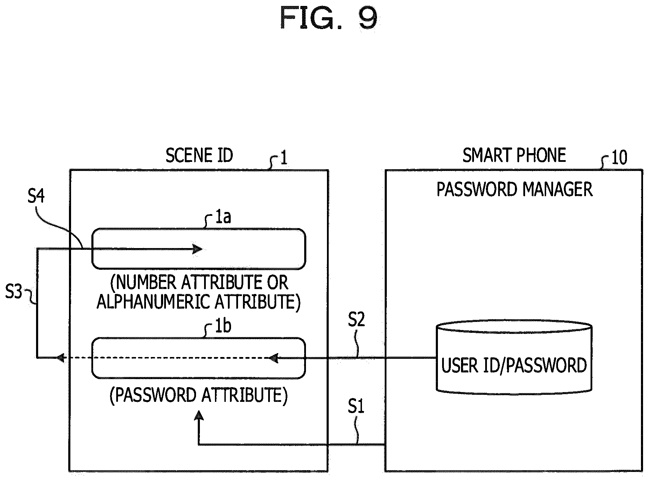

Description will next be made of the above automatic input processing. FIG. 9 is a diagram of assistance in explaining automatic input processing performed by a smart phone. The smart phone illustrated in FIG. 9 may be the smart phone 10 illustrated in FIG. 1.

As illustrated in FIG. 9, the smart phone 10 executes a password manager. When the application is started, and an authentication screen including a scene ID stored in the scene DB 21 is displayed, the password manager detects a password field 1b having the password attribute from the authentication screen (S1).

Then, the password manager enters a password stored in advance to the detected password field 1b (S2). Next, the password manager detects an ID field 1a according to an inter-field distance stored in advance (S3). The password manager thereafter enters a user ID stored in advance into the detected ID field 1a (S4).

### [Effect]

As described above, the smart phone 10 first detects an input field having the password attribute and inputs a password, and then inputs a user ID to an input field detected using an inter-field distance stored in advance. Therefore, the smart phone 10 can realize automatic input to a highly independent application in which it is difficult to detect the ID of an input field, or the like.

In addition, because the smart phone 10 manages the scene DB 21 and the authentication information DB 22 separately from each other, it suffices for the smart phone 10 to update the scene DB 21 even when the configuration of input fields of the application is changed. Therefore, even when a version upgrade of the application occurs, the smart phone 10 can suppress the occurrence of processing of reregistering authentication information, and follow a change in the configuration of the input fields.

In addition, even when a transition is made from the top screen of the application requesting authentication to the screen of another application, the smart phone 10 returns to the top screen of the application requesting authentication, and then performs automatic input processing. Therefore, the smart phone 10 can reduce the occurrence of an error in the input of authentication information due to the change of the screens.

### [Second Embodiment]

The first embodiment has been described by taking as an example a case where information is managed in the scene DB 21 and the authentication information DB 22 as separate DBs. However, the present technology is not limited to this. The information can also be managed in one DB. Accordingly, in a second embodiment, description will be made of an example in which authentication information is also managed by using a scene DB 21.

### [Automatic Input Processing according to Second Embodiment]

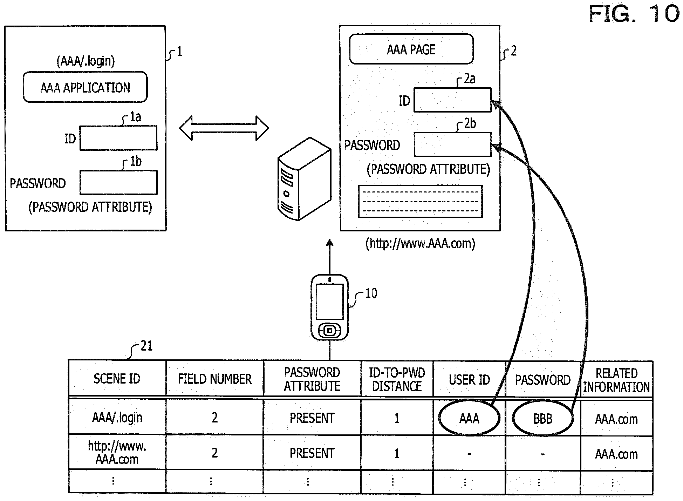

FIG. 10 is a diagram of assistance in explaining automatic input processing performed by a smart phone according to the second embodiment. As illustrated in FIG. 10, a smart phone 10 includes a scene DB 21 that stores a "scene ID," a "field number," a "password attribute," an "ID-to-PWD distance," a "user ID," a "password," and "related information" in association with each other.

The information stored in this case includes "related information," which is information different from the information of the first embodiment. The "related information" associates related scene IDs with each other. That is, in the example of FIG. 10, the "related information" of a scene ID "AAA/.login" is "AAA.com," and the "related information" of a scene ID "http://www/AAA.com" is "AAA.com." It is thus understood that these scene IDs are associated with each other.

In such a state, the smart phone 10 accesses "http://www/AAA.com" using a web browser, and obtains an AAA page 2 as a top screen. Next, from the screen of the AAA page 2, the smart phone 10 obtains the scene ID "http://www/AAA.com," and detects an input field 2b having a password attribute.

The smart phone 10 thereafter searches the scene DB 21 for a password associated with the scene ID "http://www/AAA.com." However, the password is not registered yet. The smart phone 10 therefore searches the scene DB 21 for the related information associated with the scene ID "http://www/AAA.com."

Then, the smart phone 10 identifies "AAA.com" as the related information associated with the scene ID "http://www/AAA.com." Further, the smart phone 10 refers to the scene DB 21, and searches for another scene ID whose related information is "AAA.com."

Then, the smart phone 10 identifies "AAA/.login" as a scene ID whose related information is "AAA.com," other than "http://www/AAA.com."

Further, the smart phone 10 identifies a password "BBB" associated with the newly identified scene ID "AAA/.login" from the scene DB 21, and inputs the password "BBB" to the password field 2b detected on the screen of the AAA page 2.

Next, the smart phone 10 refers to the scene DB 21, and identifies "1" as an ID-to-PWD distance associated with the target scene ID "http://www/AAA.com." Then, the smart phone 10 detects an ID field 2a from the screen of the AAA page 2 using the distance "1."

Thereafter, the smart phone 10 identifies a user ID "AAA" associated with the newly identified scene ID "AAA/.login" from the scene DB 21, and inputs the user ID "AAA" to the ID field 2a detected on the screen of the AAA page 2.

The smart phone 10 can thus input the user ID and the password of the related scene ID to make user authentication performed.

### [Flow of Processing according to Second Embodiment]

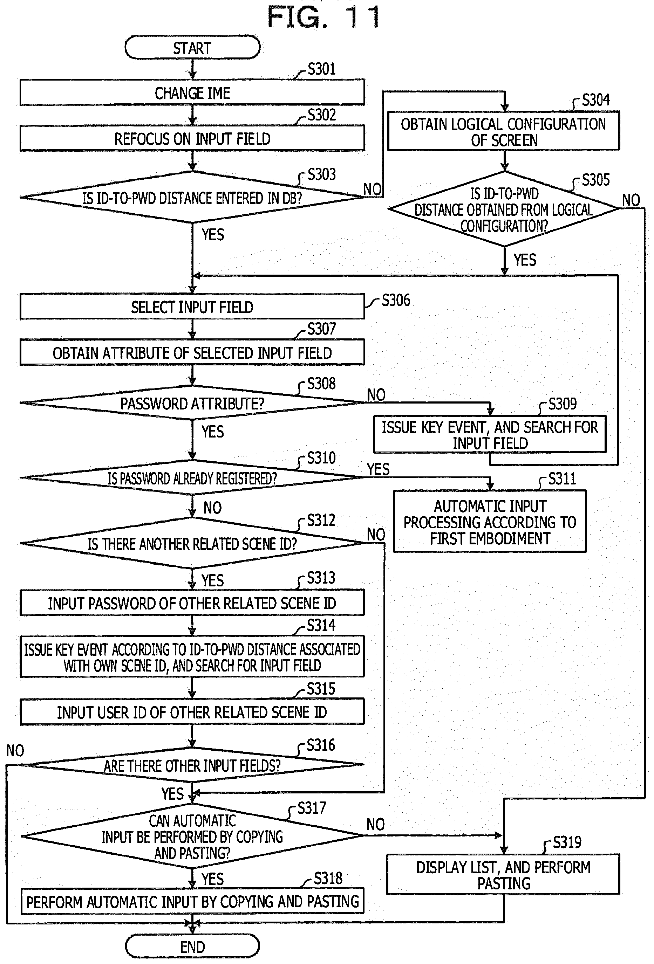

FIG. 11 is a flowchart illustrating a flow of automatic input processing performed by a smart phone according to the second embodiment.

As illustrated in FIG. 11, when a preprocessing unit 23 starts the automatic input processing, the preprocessing unit 23 changes to an IME according to the top screen of an application as a target or the like (S301). Next, when focus is not placed on an input field, that is, the target application, the preprocessing unit 23 refocuses on the target application (S302).

Then, the preprocessing unit 23 determines whether the ID-to-PWD distance corresponding to an obtained scene ID is recorded in the scene DB 21. When the ID-to-PWD distance corresponding to the obtained scene ID is not recorded (S303: No), the preprocessing unit 23 obtains the logical configuration of the screen (S304), analyzes the configuration, and calculates (obtains) the ID-to-PWD distance. When it is difficult to calculate the ID-to-PWD distance (S305: No), the preprocessing unit 23 displays a list of information associating user IDs and passwords used previously with one another on a display or the like, and pastes a user ID and a password (S319).

When the ID-to-PWD distance is recorded (S303: Yes), or when the ID-to-PWD distance can be obtained (S305: Yes), on the other hand, an attribute determining unit 24 selects an input field from the displayed top screen of the application (S306), obtains the attribute of the selected input field (S307), and determines whether or not the obtained attribute is the password attribute (S308).

Here, when the attribute determining unit 24 determines that the obtained attribute is not the password attribute (S308: No), the attribute determining unit 24 searches for another input field using a key event issued by a key event issuing unit 26 (S309), and repeats the processing from S306 on down.

When the attribute determining unit 24 determines that the obtained attribute is the password attribute (S308: Yes), on the other hand, a password input unit 25 determines whether or not a password corresponding to the target scene ID is registered in the scene DB 21 (S310).

Here, when the password input unit 25 determines that the password corresponding to the target scene ID is registered (S310: Yes), automatic input processing similar to the automatic input processing of the first embodiment is performed (S311).

When the password input unit 25 determines that the password corresponding to the target scene ID is not registered (S310: No), on the other hand, the password input unit 25 refers to the scene DB 21, and determines whether or not another scene ID related to the target scene ID is registered (S312).

Here, when another related scene ID is registered (S312: Yes), the password input unit 25 inputs a password associated with the other related scene ID to the detected password field (S313).

Next, the key event issuing unit 26 issues a key event corresponding to the ID-to-PWD distance associated with the scene ID of the displayed top screen, and retrieves an input field (S314).

Then, an ID input unit 27 inputs a user ID associated with the other related scene ID to the detected input field (S315). Processing from S316 to S319, which is similar to the processing from S213 to S216 in the first embodiment, is thereafter performed.

When it is determined in S312 that no other related scene ID is registered (S312: No), the processing from S317 on down is performed. Incidentally, the order of the processing can be changed within a scope in which no contradiction occurs.

### [Effect]

Thus, even when a password and a user ID corresponding to a scene ID are not registered, the smart phone 10 can automatically input the password and the user ID of a related scene ID. The convenience of the user can therefore be improved.

For example, when logging in to a same shopping site, it is possible to log in from a web page, and it is also possible to log in from the application of the shopping site. However, when the user has logged in only from the application, and logs in from the web page for the first time, input is requested though the same user ID and the same password are used.

Further, in such a case, the password and the user ID corresponding to the scene ID of the web page are not registered in the scene DB 21.

Accordingly, by performing the above-described processing according to the second embodiment, the smart phone 10 can identify the application associated with the web page, and automatically input the user ID and the password associated with the identified application.

### [Third Embodiment]

Embodiments of the present technology have been described thus far. However, the present technology may be carried out in various different forms other than the foregoing embodiments.

### [Key Event]

For example, the smart phone 10 can issue a key event in an arbitrary direction. For example, because an ID field is generally present above a password field, the smart phone 10 can detect the ID field by moving in an upward direction by an ID-to-PWD distance from the password field.

In addition, in the foregoing embodiments, description has been made of examples in which an example of the ID-to-PWD distance is 1, 2, or the like. However, the present technology is not limited to this. For example, detailed settings can also be made, such as +1 in an upward direction, -1 in a downward direction, +1 to the left and +1 in the upward direction, and the like. Incidentally, the upward direction refers to a direction of going toward the top of the web page, for example.

### [Registration Processing]

In addition, in the foregoing embodiments, description has been made of an example in which a new registration is made when a given button is pressed long. However, this trigger can be changed arbitrarily. For example, a button or an operation requesting a new registration can be set in advance.

### [System]

In addition, the respective configurations of the devices illustrated in the figures do not necessarily need to be physically configured as illustrated in the figures. That is, the respective configurations of the devices illustrated in the figures can be configured so as to be distributed or integrated in arbitrary units. Further, the whole or an arbitrary part of the processing functions performed in the respective devices can be implemented by a central processing unit (CPU) and a program analyzed and executed in the CPU, or can be implemented as hardware based on wired logic.

In addition, among the pieces of processing described in the present embodiments, the whole or a part of the processing described as being performed automatically can also be performed manually, or the whole or a part of the processing described as being performed manually can also be performed automatically by a publicly known method. In addition, the processing procedures, the control procedures, specific names, and information including various kinds of data and parameters that are illustrated in the document and the drawings can be changed arbitrarily unless otherwise specified.

It is to be noted that the smart phone 10 described in the present embodiments can perform functions similar to the processing described with reference to FIG. 3, FIG. 10, and the like by reading and executing an authentication information managing program. For example, the smart phone 10 expands, into the memory, a program having functions similar to the functions of the attribute determining unit 24, the password input unit 25, the key event issuing unit 26, the ID input unit 27, the copy and paste input unit 28, and the registering unit 29. Then, the smart phone 10 can perform processing similar to the processing of the foregoing embodiments by executing processes that perform processing similar to the processing of the attribute determining unit 24, the password input unit 25, the key event issuing unit 26, the ID input unit 27, the copy and paste input unit 28, and the registering unit 29.

This program can be distributed via a network such as the Internet or the like. In addition, the program can be recorded on a computer readable recording medium such as a hard disk, a flexible disk (FD), a compact disk read only memory (CD-ROM), a magneto-optical disk (MO), a digital versatile disk (DVD), or the like, and executed by being read from the recording medium by a computer. In any of the above aspects, the various features may be implemented in hardware, or as software modules running on one or more processors. Features of one aspect may be applied to any of the other aspects. The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

### Reference Signs List

10 Smart phone
21 Scene DB
22 Authentication Information DB
23 Preprocessing unit
24 Attribute Determination unit
25 Password input unit
26 Key event issuing unit
27 ID input unit
28 Copy and paste input unit
29 Registering unit

## Claims

1. An authentication information managing method performed by an information processing device (10), the authentication information managing method comprising:
storing each of at least one application identifier, each of at least one user identifier, each of at least one password, and each of at least one distance in association with each other to a memory (14), each of the at least one distance indicating each number of key events between each input field for each of the at least one user identifier and each input field for each of the at least one password in each application identified by each of the at least one application identifier;
when a specified application having a plurality of input fields is running and the specified application is identified by a specified application identifier of the at least one application identifier, detecting a first input field for a specified password among the plurality of input fields based on a specified attribution that is associated with the first input field, the specified attribution indicating that the first input field is used for a password that is the same for each application and being detected from outside the specified application, the specified password being associated with the specified application identifier in the memory (14);
inputting the specified password to the first input field;
detecting a second input field for a specified user identifier among the plurality of input fields based on a specified number of key events associated with the specified application identifier in the memory (14), the specified user identifier being associated with the specified application identifier in the memory (14); and
inputting the specified user identifier to the second input field.

2. The authentication information managing method according to claim 1, wherein
a first table and a second table is stored in the memory (14),
each of the at least one user identifier, each of the at least one password, and each of at least one piece of key data are associated each other in the first table,
each of the at least one application identifier, each of the at least one distance, and each of the at least one piece of key data are associated each other in the second table,
the specified user identifier and the specified password are identified by a specified piece of key data among the at least one piece of key data in the first table, the specified key data being identified by the specified application identifier in the second table.

3. The authentication information managing method according to any of the preceding claims, further comprising:
when the specified application is not identified by any of the at least one application identifier, identifying another specified application that is associated with the specified application, the other specified application being identified by another specified application identifier among the at least one application identifier, the other specified application having other plurality of input fields;
detecting another first input field for another specified password among the other plurality of input fields based on another specified attribution that is associated with the other first input field, the specified attribution indicating that the other first input field is used for a password and being detected from outside the other specified application, the other specified password being associated with the other specified application identifier in the memory (14);
inputting the other specified password to the other first input field;
detecting another second input field for another specified user identifier among the other plurality of input fields based on another specified distance associated with the other specified application identifier in the memory (14), the other specified user identifier being associated with the other specified application identifier in the memory (14); and
inputting the other specified user identifier to the other second input field.

4. The authentication information managing method according to any of the preceding claims, wherein
when another specified application is started before detecting the first input field, the first input field is detected after switching a screen from the other specified application to the specified application.

5. The authentication information managing method according to any of the preceding claims, wherein
no attribution detected from outside the specified application is associated with the second input field.

6. A non-transitory computer-readable storage medium storing a program that causes an information processing device (10) to execute a process, the information processing device (10) including a memory (14), the process comprising:
storing each of at least one application identifier, each of at least one user identifier, each of at least one password, and each of at least one distance in association with each other to the memory (14), each of the at least one distance indicating each number of key events between each input field for each of the at least one user identifier and each input field for each of the at least one password in each application identified by each of the at least one application identifier;
when a specified application having a plurality of input fields is running and the specified application is identified by a specified application identifier of the at least one application identifier, detecting a first input field for a specified password among the plurality of input fields based on a specified attribution that is associated with the first input field, the specified attribution indicating that the first input field is used for a password that is the same for each application and being detected from outside the specified application, the specified password being associated with the specified application identifier in the memory (14);
inputting the specified password to the first input field;
detecting a second input field for a specified user identifier among the plurality of input fields based on a specified number of key events associated with the specified application identifier in the memory (14), the specified user identifier being associated with the specified application identifier in the memory (14); and
inputting the specified user identifier to the second input field.

7. An information processing device (10) comprising:
a memory (14) configured to store each of at least one application identifier, each of at least one user identifier, each of at least one password, and each of at least one distance in association with each other, each of the at least one distance indicating each number of key events between each input field for each of the at least one user identifier and each input field for each of the at least one password in each application identified by each of the at least one application identifier;
when a specified application having a plurality of input fields is running and the specified application is identified by a specified application identifier of the at least one application identifier, a first unit (24) configured to detect a first input field for a specified password among the plurality of input fields based on a
specified attribution that is associated with the first input field, the specified attribution indicating that the first input field is used for a password that is the same for each application and being detected from outside the specified application, the specified password being associated with the specified application identifier in the memory;
a password input unit (25) configured to input the specified password to the first input field;
a second unit (26) configured to detect a second input field for a specified user identifier among the plurality of input fields based on a specified number of key events associated with the specified application identifier in the memory, the specified user identifier being associated with the specified application identifier in the memory; and
an identifier input unit (27) configured to input the specified user identifier to the second input field.

## Patentansprüche

1. Authentifizierungsinformationsverwaltungsverfahren, das von einer Informationsverarbeitungsvorrichtung (10) durchgeführt wird, wobei das Authentifizierungsinformationsverwaltungsverfahren Folgendes umfasst:
Speichern jeder von mindestens einer Anwendungskennung, jeder von mindestens einer Benutzerkennung, jedes von mindestens einem Kennwort und jeder von mindestens einer Entfernung in Assoziation miteinander in einem Speicher (14), wobei jede der mindestens einen Entfernung jede Anzahl von Schlüsselereignissen zwischen jedem Eingabefeld für jede der mindestens einen Benutzerkennung und jedem Eingabefeld für jedes des mindestens einen Kennworts in jeder Anwendung angibt, die durch jede der mindestens einen Anwendungskennung identifiziert wird;
wenn eine spezifizierte Anwendung, die eine Vielzahl von Eingabefeldern aufweist, läuft und die spezifizierte Anwendung durch eine spezifizierte Anwendungskennung der mindestens einen Anwendungskennung identifiziert wird, Erkennen eines ersten Eingabefelds für ein spezifiziertes Kennwort aus der Vielzahl von Eingabefeldern auf der Basis einer spezifizierten Zuordnung, die mit dem ersten Eingabefeld assoziiert ist, wobei die spezifizierte Zuordnung angibt, dass das erste Eingabefeld für ein Kennwort verwendet wird, das für jede Anwendung dasselbe ist, und
von außerhalb der spezifizierten Anwendung erkannt wird, wobei das spezifizierte Kennwort mit der spezifizierten Anwendungskennung in dem Speicher (14) assoziiert ist;
Eingeben des spezifizierten Kennworts in das erste Eingabefeld;
Erkennen eines zweiten Eingabefelds für eine spezifizierte Benutzerkennung aus der Vielzahl von Eingabefeldern auf der Basis einer spezifizierten Anzahl von Schlüsselereignissen, die mit der spezifizierten Anwendungskennung in dem Speicher (14) assoziiert ist, wobei die spezifizierte Benutzerkennung mit der spezifizierten Anwendungskennung in dem Speicher (14) assoziiert ist; und
Eingeben der spezifizierten Benutzerkennung in das zweite Eingabefeld.

2. Authentifizierungsinformationsverwaltungsverfahren nach Anspruch 1, wobei
eine erste Tabelle und eine zweite Tabelle in dem Speicher (14) gespeichert sind,
jede der mindestens einen Benutzerkennung, jedes des mindestens einen Kennworts und jeder von mindestens einem Schlüsseldatensatz in der ersten Tabelle miteinander assoziiert sind, jede der mindestens einen Anwendungskennung, jede der mindestens einen Entfernung und jeder des mindestens einen Schlüsseldatensatzes in der zweiten Tabelle miteinander assoziiert sind,
die spezifizierte Benutzerkennung und das spezifizierte Kennwort durch einen spezifizierten Schlüsseldatensatz aus dem mindestens einen Schlüsseldatensatz in der ersten Tabelle identifiziert wird, wobei die spezifizierten Schlüsseldaten durch die spezifizierte Anwendungskennung in der zweiten Tabelle identifiziert werden.

3. Authentifizierungsinformationsverwaltungsverfahren nach einem der vorhergehenden Ansprüche, das weiterhin Folgendes umfasst:
wenn die spezifizierte Anwendung nicht durch eine beliebige der mindestens einen
Anwendungskennung identifiziert wird, Identifizieren einer anderen spezifizierten Anwendung, die mit der spezifizierten Anwendung assoziiert ist, wobei die andere spezifizierte Anwendung durch eine andere spezifizierte Anwendungskennung aus der mindestens einen Anwendungskennung identifiziert wird, wobei die andere spezifizierte Anwendung eine andere Vielzahl von Eingabefeldern aufweist;
Erkennen eines anderen ersten Eingabefelds für ein anderes spezifiziertes Kennwort aus der anderen Vielzahl von Eingabefeldern auf der Basis einer anderen spezifizierten Zuordnung, die mit dem anderen ersten Eingabefeld assoziiert ist, wobei die spezifizierte Zuordnung angibt, dass das andere erste Eingabefeld für ein Kennwort verwendet wird und von außerhalb der anderen spezifizierten Anwendung erkannt wird, wobei das andere spezifizierte Kennwort mit der anderen spezifizierten Anwendungskennung in dem Speicher (14) assoziiert ist;
Eingeben des anderen spezifizierten Kennworts in das andere erste Eingabefeld;
Erkennen eines anderen zweiten Eingabefelds für eine andere spezifizierte Benutzerkennung aus der anderen Vielzahl von Eingabefeldern auf der Basis einer anderen spezifizierten Entfernung, die mit der anderen spezifizierten Anwendungskennung in dem Speicher (14) assoziiert ist, wobei die andere spezifizierte Benutzerkennung mit der anderen spezifizierten Anwendungskennung in dem Speicher (14) assoziiert ist; und
Eingeben der anderen spezifizierten Benutzerkennung in das andere zweite Eingabefeld.

4. Authentifizierungsinformationsverwaltungsverfahren nach einem der vorhergehenden Ansprüche, wobei,
wenn eine andere spezifizierte Anwendung gestartet wird, bevor das erste Eingabefeld erkannt wird, das erste Eingabefeld nach Umschalten eines Bildschirms von der anderen spezifizierten Anwendung zu der spezifizierten Anwendung erkannt wird.

5. Authentifizierungsinformationsverwaltungsverfahren nach einem der vorhergehenden Ansprüche, wobei
keine Zuordnung, die von außerhalb der spezifizierten Anwendung erkannt wird, mit dem zweiten Eingabefeld assoziiert ist.

6. Nichtflüchtiges computerlesbares Speichermedium, das ein Programm speichert, das bewirkt, dass eine Informationsverarbeitungsvorrichtung (10) ein Verfahren ausführt, wobei die Informationsverarbeitungsvorrichtung (10) einen Speicher (14) beinhaltet, wobei das Verfahren Folgendes umfasst:
Speichern jeder von mindestens einer Anwendungskennung, jeder von mindestens einer Benutzerkennung, jedes von mindestens einem Kennwort und jeder von mindestens einer Entfernung in Assoziation miteinander in dem Speicher (14), wobei jede der mindestens einen Entfernung jede Anzahl von Schlüsselereignissen zwischen jedem Eingabefeld für jede der mindestens einen Benutzerkennung und jedem Eingabefeld für jedes des mindestens einen Kennworts in jeder Anwendung angibt, die durch jede der mindestens einen Anwendungskennung identifiziert wird;
wenn eine spezifizierte Anwendung, die eine Vielzahl von Eingabefeldern aufweist, läuft und die spezifizierte Anwendung durch eine spezifizierte Anwendungskennung der mindestens einen Anwendungskennung identifiziert wird, Erkennen eines ersten Eingabefelds für ein spezifiziertes Kennwort aus der Vielzahl von Eingabefeldern auf der Basis einer spezifizierten Zuordnung, die mit dem ersten Eingabefeld assoziiert ist, wobei die spezifizierte Zuordnung angibt, dass das erste Eingabefeld für ein Kennwort verwendet wird, das für jede Anwendung dasselbe ist, und
von außerhalb der spezifizierten Anwendung erkannt wird, wobei das spezifizierte Kennwort mit der spezifizierten Anwendungskennung in dem Speicher (14) assoziiert ist;
Eingeben des spezifizierten Kennworts in das erste Eingabefeld;
Erkennen eines zweiten Eingabefelds für eine spezifizierte Benutzerkennung aus der Vielzahl von Eingabefeldern auf der Basis einer spezifizierten Anzahl von Schlüsselereignissen, die mit der spezifizierten Anwendungskennung in dem Speicher (14) assoziiert ist, wobei die spezifizierte Benutzerkennung mit der spezifizierten Anwendungskennung in dem Speicher (14) assoziiert ist; und
Eingeben der spezifizierten Benutzerkennung in das zweite Eingabefeld.

7. Informationsverarbeitungsvorrichtung (10), umfassend:
einen Speicher (14), der dazu konfiguriert ist, jede von mindestens einer Anwendungskennung, jede von mindestens einer Benutzerkennung, jedes von mindestens einem Kennwort und jede von mindestens einer Entfernung in Assoziation miteinander, wobei jede der mindestens einen Entfernung jede Anzahl von Schlüsselereignissen zwischen jedem Eingabefeld für jede der mindestens einen Benutzerkennung und jedem Eingabefeld für jedes des mindestens einen Kennworts in jeder Anwendung angibt, die durch jede der mindestens einen Anwendungskennung identifiziert wird;
wenn eine spezifizierte Anwendung, die eine Vielzahl von Eingabefeldern aufweist, läuft und die spezifizierte Anwendung durch eine spezifizierte Anwendungskennung der mindestens einen Anwendungskennung identifiziert wird, eine erste Einheit (24), die dazu konfiguriert ist, ein erstes Eingabefeld für ein spezifiziertes Kennwort aus der Vielzahl von Eingabefeldern auf der Basis einer spezifizierten Zuordnung, die mit dem ersten Eingabefeld assoziiert ist, zu erkennen, wobei die spezifizierte Zuordnung angibt, dass das erste Eingabefeld für ein Kennwort verwendet wird, das für jede Anwendung dasselbe ist, und von außerhalb der spezifizierten Anwendung erkannt wird, wobei das spezifizierte Kennwort mit der spezifizierten Anwendungskennung in dem Speicher assoziiert ist;
eine Kennworteingabeeinheit (25), die dazu konfiguriert ist, das spezifizierte Kennwort in das erste Eingabefeld einzugeben;
eine zweite Einheit (26), die dazu konfiguriert ist, ein zweites Eingabefeld für eine spezifizierte Benutzerkennung aus der Vielzahl von Eingabefeldern auf der Basis einer spezifizierten Anzahl von Schlüsselereignissen, die mit der spezifizierten Anwendungskennung in dem Speicher assoziiert ist, zu erkennen, wobei die spezifizierte Benutzerkennung mit der spezifizierten Anwendungskennung in dem Speicher assoziiert ist; und
eine Kennungseingabeeinheit (27), die dazu konfiguriert ist, die spezifizierte Benutzerkennung in das zweite Eingabefeld einzugeben.

## Revendications

1. Procédé de gestion d'informations d'authentification effectué par un dispositif de traitement d'informations (10), le procédé de gestion d'informations d'authentification comprenant les étapes consistant à :
mémoriser chacun d'au moins un identifiant d'application, chacun d'au moins un identifiant d'utilisateur, chacun d'au moins un mot de passe, et chacune d'au moins une distance en association les uns avec les autres dans une mémoire (14), chacune de la au moins une distance indiquant chaque nombre d'événements clés entre chaque champ d'entrée pour chacun du au moins un identifiant d'utilisateur et chaque champ d'entrée pour chacun du au moins un mot de passe dans chaque application identifiée par chacun du au moins un identifiant d'application ;
lorsqu'une application spécifiée ayant une pluralité de champs d'entrée est en cours d'exécution et que l'application spécifiée est identifiée par un identifiant d'application spécifiée du au moins un identifiant d'application, détecter un premier champ d'entrée pour un mot de passe spécifié parmi la pluralité de champs d'entrée sur la base d'une attribution spécifiée qui est associée au premier champ d'entrée, l'attribution spécifiée indiquant que le premier champ d'entrée est utilisé pour un mot de passe qui est identique pour chaque application et qui est détecté en dehors de l'application spécifiée, le mot de passe spécifié étant associé à l'identifiant d'application spécifiée dans la mémoire (14) ;
entrer le mot de passe spécifié dans le premier champ d'entrée ;
détecter un second champ d'entrée pour un identifiant d'utilisateur spécifié parmi la pluralité de champs d'entrée sur la base d'un nombre spécifié d'événements clés associés à l'identifiant d'application spécifiée dans la mémoire (14), l'identifiant d'utilisateur spécifié étant associé à l'identifiant d'application spécifiée dans la mémoire (14) ; et
entrer l'identifiant d'utilisateur spécifié dans le second champ d'entrée.

2. Procédé de gestion d'informations d'authentification selon la revendication 1, dans lequel
une première table et une seconde table sont mémorisées dans la mémoire (14),
chacun du au moins un identifiant d'utilisateur, chacun du au moins un mot de passe, et chacune de la au moins une partie de données clés sont associés les uns aux autres dans la première table,
chacun du au moins un identifiant d'application, chacune de la au moins une distance, et chacune de la au moins une partie de données clés sont associés les uns aux autres dans la seconde table,
l'identifiant d'utilisateur spécifié et le mot de passe spécifié sont identifiés par une partie spécifiée de données clés parmi la au moins une partie de données clés dans la première table, les données clés spécifiées étant identifiées par l'identifiant d'application spécifiée dans la seconde table.

3. Procédé de gestion d'informations d'authentification selon l'une quelconque des revendications précédentes, comprenant en outre les étapes consistant à :
lorsque l'application spécifiée n'est pas identifiée par l'un quelconque parmi le au moins un identifiant d'application, identifier une autre application spécifiée qui est associée à l'application spécifiée, l'autre application spécifiée étant identifiée par un autre identifiant d'application spécifiée parmi le au moins un identifiant d'application, l'autre application spécifiée ayant une autre pluralité de champs d'entrée ;
détecter un autre premier champ d'entrée pour un autre mot de passe spécifié parmi l'autre pluralité de champs d'entrée sur la base d'une autre attribution spécifiée qui est associée à l'autre premier champ d'entrée, l'attribution spécifiée indiquant que l'autre premier champ d'entrée est utilisé pour un mot de passe et étant détectée en dehors de l'autre application spécifiée, l'autre mot de passe spécifié étant associé à l'autre identifiant d'application spécifiée dans la mémoire (14) ;
entrer l'autre mot de passe spécifié dans l'autre premier champ d'entrée ;
détecter un autre second champ d'entrée pour un autre identifiant d'utilisateur spécifié parmi l'autre pluralité de champs d'entrée sur la base d'une autre distance spécifiée associée à l'autre identifiant d'application spécifié dans la mémoire (14), l'autre identifiant d'utilisateur spécifié étant associé à l'autre identifiant d'application spécifié dans la mémoire (14) ; et
entrer l'autre identifiant d'utilisateur spécifié dans l'autre second champ d'entrée.

4. Procédé de gestion d'informations d'authentification selon l'une quelconque des revendications précédentes, dans lequel
lorsqu'une autre application spécifiée est démarrée avant la détection du premier champ d'entrée, le premier champ d'entrée est détecté après la commutation d'un écran depuis l'autre application spécifiée vers l'application spécifiée.

5. Procédé de gestion d'informations d'authentification selon l'une quelconque des revendications précédentes, dans lequel
aucune attribution détectée en dehors de l'application spécifiée n'est associée au second champ d'entrée.

6. Support de stockage non transitoire lisible par ordinateur stockant un programme qui amène un dispositif de traitement d'informations (10) à exécuter un processus, le dispositif de traitement d'informations (10) comprenant une mémoire (14), le processus comprenant les étapes consistant à :
mémoriser chacun d'au moins un identifiant d'application, chacun d'au moins un identifiant d'utilisateur, chacun d'au moins un mot de passe, et chacune d'au moins une distance en association les uns avec les autres dans une mémoire (14), chacune de la au moins une distance indiquant chaque nombre d'événements clés entre chaque champ d'entrée pour chacun du au moins un identifiant d'utilisateur et chaque champ d'entrée pour chacun du au moins un mot de passe dans chaque application identifiée par chacun du au moins un identifiant d'application ;
lorsqu'une application spécifiée ayant une pluralité de champs d'entrée est en cours d'exécution et que l'application spécifiée est identifiée par un identifiant d'application spécifiée du au moins un identifiant d'application, détecter un premier champ d'entrée pour un mot de passe spécifié parmi la pluralité de champs d'entrée sur la base d'une attribution spécifiée qui est associée au premier champ d'entrée, l'attribution spécifiée indiquant que le premier champ d'entrée est utilisé pour un mot de passe qui est identique pour chaque application et étant détectée en dehors de l'application spécifiée, le mot de passe spécifié étant associé à l'identifiant d'application spécifiée dans la mémoire (14) ;
entrer le mot de passe spécifié dans le premier champ d'entrée ;
détecter un second champ d'entrée pour un identifiant d'utilisateur spécifié parmi la pluralité de champs d'entrée sur la base d'un nombre spécifié d'événements clés associés à l'identifiant d'application spécifiée dans la mémoire (14), l'identifiant d'utilisateur spécifié étant associé à l'identifiant d'application spécifiée dans la mémoire (14) ; et
entrer l'identifiant d'utilisateur spécifié dans le second champ d'entrée.

7. Dispositif de traitement d'informations (10) comprenant :
une mémoire (14) configurée pour mémoriser chacun d'au moins un identifiant d'application, chacun d'au moins un identifiant d'utilisateur, chacun d'au moins un mot de passe, et chacune d'au moins une distance en association les uns avec les autres, chacune de la au moins une distance indiquant chaque nombre d'événements clés entre chaque champ d'entrée pour chacun du au moins un identifiant d'utilisateur et chaque champ d'entrée pour chacun du au moins un mot de passe dans chaque application identifiée par chacun du au moins un identifiant d'application ;
lorsqu'une application spécifiée ayant une pluralité de champs d'entrée est en cours d'exécution et que l'application spécifiée est identifiée par un identifiant d'application spécifiée du au moins un identifiant d'application, une première unité (24) configurée pour détecter un premier champ d'entrée pour un mot de passe spécifié parmi la pluralité de champs d'entrée sur la base d'une attribution spécifiée qui est associée au premier champ d'entrée, l'attribution spécifiée indiquant que le premier champ d'entrée est utilisé pour un mot de passe qui est identique pour chaque application et étant détectée en dehors de l'application spécifiée, le mot de passe spécifié étant associé à l'identifiant d'application spécifiée dans la mémoire ;
une unité d'entrée de mot de passe (25) configurée pour entrer le mot de passe spécifié dans le premier champ d'entrée ;
une seconde unité (26) configurée pour détecter un second champ d'entrée pour un identifiant d'utilisateur spécifié parmi la pluralité de champs d'entrée sur la base d'un nombre spécifié d'événements clés associés à l'identifiant d'application spécifiée dans la mémoire, l'identifiant d'utilisateur spécifié étant associé au identifiant d'application spécifiée dans la mémoire ; et
une unité d'entrée d'identifiant (27) configurée pour entrer l'identifiant d'utilisateur spécifié dans le second champ d'entrée.
